# FASCICULE DE BREVET EUROPEEN

(11) **EP 2 058 492 B1**
(45) Date de publication et mention de la délivrance du brevet: **05.05.2010**
(21) Numéro de dépôt: 08168073.8
(22) Date de dépôt: 31.10.2008
(51) Int. Cl.: F02D 41/00, F02D 41/06

(54) **Procède de démarrage a froid d'un moteur a combustion interne**
Verfahren zum Kaltstart eines Verbrennungsmotors
Method of cold-starting an internal combustion engine

(30) Priorité: 09.11.2007 FR 0758905
(43) Date de publication de la demande: 13.05.2009
(73) Titulaire: PEUGEOT CITROËN AUTOMOBILES S.A., 78140 Velizy Villacoublay (FR)
(72) Inventeur: Joly, Philippe, 78950 Gambais (FR); Pelletier, Vincent, 76290 Fontaine la Mallet (FR)
(74) Mandataire: Ménès, Catherine

(56) Documents cités:
- EP-A- 1 178 203
- EP-A- 1 793 110
- DE-A1- 10 327 978
- DE-B3-102006 043 702
- US-A- 5 195 497

## Description

L'invention concerne un procédé de démarrage à froid d'un moteur à combustion interne pour véhicule automobile. De façon générale, l'invention vise à réduire les émissions polluantes à la source, des moteurs à essence.

La qualité du carburant utilisé pour les véhicules est très variable, notamment en fonction de la zone géographique où circule le véhicule. Une propriété physique du carburant particulièrement variable est sa capacité à se vaporiser. Cette capacité est bien connue dans la littérature anglo-saxonne sous l'acronyme PVR pour Pression Vapeur Raid. Cet acronyme sera utilisé dans la suite de la description de l'invention. Pour les carburants se vaporisant bien, on parle de carburant HPVR (Haut PVR) et pour les carburants se vaporisant mal, on parle de carburant BPVR (Bas PVR).

Pour pouvoir démarrer correctement, un moteur à essence a besoin d'avoir un mélange d'air et d'essence proche d'un mélange stoechiométrique. Cela suppose que la quantité de carburant sous forme gazeuse soit bien maîtrisée. Or, selon la PVR du carburant, la quantité de carburant sous forme gazeuse participant à la combustion au démarrage à froid et à la mise en action du moteur varie énormément pour une même quantité de carburant injectée.

Afin de garantir une quantité de carburant sous forme gazeuse suffisante pour réaliser de bonnes combustions au démarrage et à la mise en action du moteur, les calibrations sont réalisés avec un carburant représentatif d'un carburant de type BPVR. Ensuite, des vérifications sont réalisées pour s'assurer que lorsque l'on utilise un carburant HPVR, les quantités injectées ne sont pas trop grandes et ne risquent pas d'empêcher la combustion par un excès d'essence sous forme vapeur. Le mélange ne serait alors pas inflammable.

Le réglage est donc unique quel que soit le carburant. En conséquence, lorsque l'on utilise un carburant HPVR, la quantité de carburant sous forme vapeur est en excès lors du démarrage et la mise en action du moteur. Cet excès ne participe pas à la combustion et se retrouve à l'échappement du moteur sous formes d'hydrocarbures imbrûlés (HC). Ceci a un impact dirent sur les émissions polluantes du moteur. Lorsque le véhicule est équipé d'un catalyseur, celui-ci n'est pas amorcé à froid et les hydrocarbures imbrûlés s'échappent dans l'atmosphère.

Lors de démarrage par grand froid, lorsque la température ambiante est en dessous de -15 °C, l'excès de carburant sous forme vapeur crée également des fumées noires à l'échappement.

On a tenté de résoudre ce problème en adaptant la quantité de carburant injectée dans un cylindre du moteur lors des phases de démarrage en fonction de la capacité du carburant à se vaporiser. La mesure directe cette capacité étant difficile à réaliser à bord du véhicule, la capacité du carburant à se vaporiser a été estimée en fonction d'une chute de régime du moteur lors d'une réduction de quantité de carburant injecté intervenant après le démarrage du moteur. La réduction de la quantité de carburant injecté étant calibrée, la chute du régime moteur donne une information représentative de la capacité du carburant à se vaporiser. On peut calibrer cette chute en fonction de différents types de carburants ayant différentes capacités à se vaporiser.

Une autre méthode consiste à mesurer le temps nécessaire au démarreur pour lancer le moteur. Cette durée peut être calibrée en fonction de différents types de carburants.

De façon générale, ces deux méthodes comparent une évolution du régime moteur lors d'une phase de démarrage à froid par rapport à une évolution de régime moteur de référence. Ceci améliore l'adaptation de la quantité de carburant injecté dans le moteur lors d'une opération de démarrage intervenant après l'estimation de la capacité du carburant à se vaporiser mais reste imparfait.
Les documents DE 103 27 978 A1 et US 5.195.497A divulguent une autre méthode dont la capacité à se vaporiser du carburant est estimé en fonction d'un coefficient de richesse du mélange déterminé par les moyens de régulation de richesse.

L'invention vise à améliorer la précision de l'estimation de la capacité du carburant à se vaporiser.

A cet effet, l'invention a pour objet un procédéde démarrage d'un moteur à combustion interne pour véhicule, notamment automobile, le moteur utilisant du carburant, le véhicule comprenant des moyens d'estimation d'une capacité à se vaporiser du carburant, des moyens pour adapter une quantité de carburant injectée dans un cylindre du moteur lors d'un démarrage du moteur en fonction de la capacité estimée à se vaporiser du carburant, des moyens de régulation de richesse d'un mélange d'air et de carburant brûlé dans le moteur. les moyens d'estimation d'une capacité à se vaporiser du carburant comparent une évolution du régime moteur lors d'une phase de démarrage à froid par rapport à une évolution de régime moteur de référence, caractérisé en ce qu'on corrige une valeur estimée de capacité à se vaporiser du carburant en fonction d'un coefficient de richesse du mélange déterminé par les moyens de régulation de richesse.

On peut conditionner la correction à une autorisation vérifiant si le coefficient de richesse est hors d'une fourchette de valeurs par exemple fonction d'une température du moteur et/ou si le régime du moteur est stabilisé à une valeur de ralenti.

La correction peut ne s'effectuer que pendant une durée donnée débutant après une période de latence suivant l'autorisation.

La durée peut être exprimée en une valeur de nombre de tour du moteur.

La correction est par exemple proportionnelle à un écart de valeur du coefficient de richesse par rapport à une valeur nominale du coefficient de richesse.

Un coefficient de proportionnalité de la correction est par exemple fixé lors de la construction du véhicule.

La correction est par exemple incrémentée à chaque tour du moteur tant que la valeur de correction ne sort pas d'une fourchette de valeurs données de correction de capacité à se vaporiser du carburant.

L'invention sera mieux comprise et d'autres avantages apparaîtront à la lecture de la description détaillée d'un mode de réalisation donné à titre d'exemple, description illustrée par les dessins joints dans lesquels :

la figure 1 représente l'évolution dans le temps du régime d'un moteur à combustion interne et plusieurs exemples d'un coefficient de richesse de ce moteur ;

la figure 2 représente sous forme bloc diagramme un exemple de procédé mettant en oeuvre l'invention.

Par souci de clarté, les mêmes éléments porteront les mêmes repères dans les différentes figures.

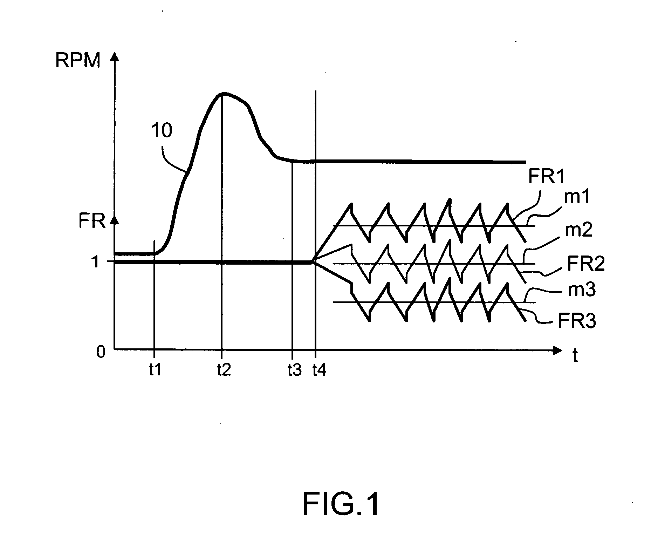

La figure 1 représente au moyen d'une courbe 10 l'évolution dans le temps t du régime moteur d'un véhicule durant une phase de démarrage. Le régime moteur est par exemple exprimé en nombre de tours par minutes noté RPM sur la figure 1.

A l'instant origine, 0 sur l'axe des temps, une opération de démarrage du moteur débute. Tant que le démarreur entraîne le moteur, le régime moteur est sensiblement stable par exemple entre 200 et 300 tours par minutes. Une première explosion intervient dans un cylindre du moteur à un instant t1 et le régime du moteur croît jusqu'à atteindre un maximum à un instant t2. Ce maximum est par exemple de l'ordre de 1400 tours par minute. Après l'instant t2, le régime moteur décroît jusqu'à un instant t3 puis se stabilise par exemple à environ 1000 tours par minute.

Les moteurs modernes cherchent à réduire au maximum les émissions de polluants dans les gaz d'échappement. Pour se faire le véhicule est muni d'un pot d'échappement catalytique qui permet de réduire notablement ces polluants. Ce pot d'échappement fonctionne de façon optimale lorsque la combustion dans le moteur se fait avec un mélange d'air et de carburant le plus proche possible de la stoechiométrie. Par exemple pour un moteur à essence, le rapport entre la masse de carburant et la masse d'air doit être aussi proche que possible de 14,7. Pour assurer que ce rapport reste constant durant le fonctionnement normal du moteur, les véhicules comportent des moyens de régulation de richesse d'un mélange d'air et de carburant. Ces moyens associent une sonde mesurant la quantité d'oxygène présent dans les gaz d'échappement, sonde bien connue sous le nom de sonde lambda, à un calculateur gérant la quantité de carburant injectée dans les cylindres du moteur. Le calculateur détermine un coefficient de richesse CR généralement calibré de façon à ce qu'il délivre une valeur de 1 pour un mélange stoechiométrique. On connaît deux types de capteur, les capteurs proportionnels, délivrant une valeur de quantité d'oxygène sur une large plage, et les capteurs dits ON/OFF délivrant une valeur saturée sur une borne haute ou basse en fonction du fait que la quantité d'oxygène présent est en dessous ou au-dessus d'une valeur donnée correspondant au mélange stoechiométrique.

L'invention vise à utiliser le coefficient de richesse non pas pour estimer une capacité à se vaporiser du carburant, mais pour corriger la capacité à se vaporiser du carburant définie par ailleurs, par exemple par comparaison de la courbe 10, en totalité ou en partie, à une courbe de référence. Il est possible de comparer la courbe 10 à un faisceau de courbes de références, chacune établie pour un carburant de capacité à se vaporiser distincte. La courbe du faisceau la plus proche de la courbe mesurée donne une valeur de capacité à se vaporiser du carburant utilisé.

L'invention utilise les moyens de régulation de richesse déjà présents dans le véhicule. Les deux types de sonde lambda décrits plus haut sont utilisables pour la mise en oeuvre de l'invention.

Au-dessous de la courbe 10, on a représenté l'évolution du coefficient de richesse du moteur, noté FR. Les sondes lambda nécessitent un préchauffage avant d'être utilisables. En conséquence, le coefficient de richesse CR ne peut être calculé qu'après un instant t4 généralement postérieure à l'instant t3. Entre l'instant origine 0 et l'instant t4, le coefficient de richesse CR est par convention égal à 1 pour éviter tout enclenchement d'une régulation de richesse. Au-delà de l'instant t4, trois exemples d'évolution du coefficient de richesse sont représentés sur la figure 1 sous forme de trois courbes FR1, FR2 et FR3. La courbe FR1 montre un coefficient de richesse évoluant autour d'une valeur moyenne m1 supérieure à 1. La courbe FR2 montre un coefficient de richesse évoluant autour d'une valeur moyenne m2 égale à 1 et la courbe FR3 montre un coefficient de richesse évoluant autour d'une valeur moyenne m3 inférieure à 1. La valeur m1 est représentative d'un mélange trop pauvre par rapport à un mélange stoechiométrique, la valeur m2 est représentative d'un mélange stoechiométrique et la valeur m3 est représentative d'un mélange trop riche. L'invention permet d'utiliser la valeur moyenne du coefficient de richesse CR pour corriger l'estimation de la capacité à se vaporiser du carburant. On note que la définition d'un coefficient de richesse CR supérieur à 1 pour un mélange trop pauvre et inférieur à 1 pour un mélange trop riche est purement conventionnelle. Pour mettre en oeuvre l'invention, il suffit de connaître une information quantitative sur la richesse du mélange par rapport à un mélange de référence, en l'occurrence stoechiométrique.

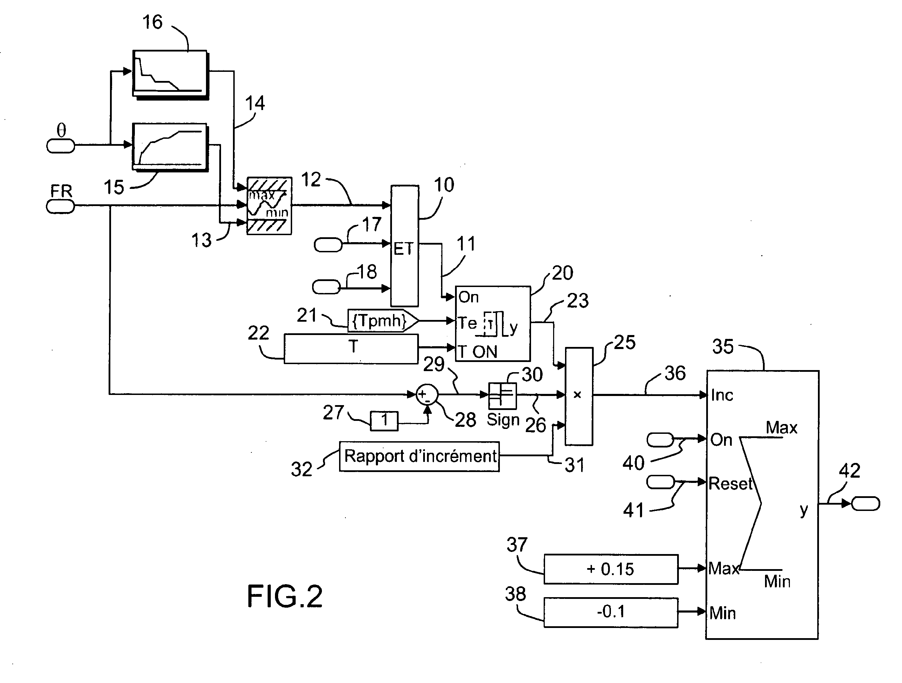

La figure 2 illustre sous forme de bloc diagramme un exemple de procédé selon l'invention.

Un opérateur logique 10 délivre une autorisation 11 à effectuer une correction selon l'invention. L'autorisation est fonction de plusieurs conditions et l'opérateur 10 représente une fonction ET entre ces différentes conditions. Une première entrée 12 de l'opérateur 10 est fonction du coefficient de richesse CR. Tant que le coefficient de richesse CR reste compris entre deux bornes 13 et 14, l'entrée 12 n'est pas activée. Les bornes 13 et 14 sont par exemple fonction d'une température θ du moteur, par exemple la température d'un fluide de refroidissement du moteur. Les valeurs des bornes en fonction de la température θ sont figurées respectivement aux blocs 15 et 16. Ces fonctions sont déterminées empiriquement lors de la mise au point du moteur.

Une deuxième entrée 17 de l'opérateur 10 représente une information sur le fait que le régime du moteur est stabilisé à une valeur de ralenti, autrement dit qu'un conducteur du véhicule n'actionne pas une commande d'accélération du véhicule. En effet, le coefficient de richesse CR peut évoluer lors d'évolutions du régime moteur et on autorise la correction selon l'invention que si cette information est acquittée.

Une troisième entrée 18 de l'opérateur représente une possibilité pour un système mettant en oeuvre l'invention d'inhiber la correction.

L'autorisation 11 est acquise lorsque les trois conditions présentes aux entrées 12, 17 et 18 sont remplies.

Un bloc 20 représente une durée 21 pendant laquelle la correction selon l'invention s'effectue. Cette durée débute après une période de latence 22 suivant l'autorisation 11. La période de latence 22 est par exemple d'une seconde. La durée est de l'ordre de quelques secondes. La durée 21 est avantageusement quantifiée en un nombre de tours effectués par le moteur et noté Tpmh. Cette quantification en nombre de tours du moteur permet de se prémunir de nombreux paramètres susceptibles d'altérer le régime de ralenti du moteur, tels que des frottements internes au moteur dus par exemple à l'usure du moteur ou aux variations d'une température d'un lubrifiant du moteur.

Le bloc 20 délivre une information binaire 23 formant une première entrée d'un opérateur multiplicatif 25. Une deuxième entrée 26 de l'opérateur 25 est formée par un écart de valeur entre le coefficient de richesse CR et une valeur nominale du coefficient de richesse représentée au bloc 27. Par exemple, si la valeur nominale du coefficient de richesse est égale à 1, on peut soustraire cette valeur nominale à la valeur du coefficient de richesse CR au moyen d'un opérateur 28 et, si besoin est, inverser le signe du résultat 29 de la soustraction au moyen d'un opérateur 30. Une troisième entrée 31 de l'opérateur 25 délivre un rapport d'incrément 32 défini lors de la conception du moteur. L'incrément 32 exprime un rapport entre la variation souhaitée pour la correction de la valeur de capacité du carburant à se vaporiser et la différence entre la valeur calculée du coefficient de richesse CR et sa valeur nominale 27.

L'opérateur 25 délivre à un sommateur 35 un incrément 36 résultat de la multiplication de la différence entre la valeur calculée du coefficient de richesse CR et sa valeur nominale 27 par le rapport d'incrément pendant la durée 21. Le sommateur 35 cumule l'incrément 36 tant que ce cumul reste compris entre deux bornes 37 et 38. La borne 37 représente une correction maximale de la valeur de capacité du carburant à se vaporiser. Un exemple chiffré de cette borne 37 est de +0,15. La borne 38 représente une correction minimale de la valeur de capacité du carburant à se vaporiser. Un exemple chiffré de cette borne 37 est de -0,1. Ces chiffres sont fonction de carburant de référence HPVR pour la borne haute 37 et BPVR pour la borne basse 38. L'incrément 36 est établi pour chaque tour du moteur, par exemple à un instant où un des pistons du moteur atteint son point mort haut. La sommation se fait sur la durée 21. Une entrée 40 du sommateur 35 permet d'inhiber la sommation et une entrée 41 du sommateur 35 permet de remettre à zéro la sommation. Une sortie 42 du sommateur 35 délivre une valeur de correction à appliquer à l'estimation de capacité à se vaporiser du carburant établie par ailleurs. Cette valeur de correction est utilisable pour le prochain démarrage à froid du moteur et pourra éventuellement être à nouveau modifiée lors de ce démarrage.

## Revendications

1. Procédé de démarrage d'un moteur à combustion interne d'un véhicule, notamment automobile, le moteur utilisant du carburant, le véhicule comprenant des moyens d'estimation d'une capacité à se vaporiser du carburant, des moyens pour adapter une quantité de carburant injectée dans un cylindre du moteur lors d'un démarrage du moteur en fonction de la capacité estimée à se vaporiser du carburant, des moyens de régulation de richesse d'un mélange d'air et de carburant brûlé dans le moteur, lesdits moyens d'estimation d'une capacité à se vaporiser du carburant comparant une évolution du régime moteur lors d'une phase de démarrage à froid par rapport à une évolution de régime moteur de référence, **caractérisé en ce qu'**on corrige (25, 35) une valeur estimée de capacité à se vaporiser du carburant en fonction d'un coefficient de richesse (CR) du mélange déterminé par les moyens de régulation de richesse.

2. Procédé selon la revendication 1, **caractérisé en ce que** la correction est autorisée (12) si le coefficient de richesse (CR) est hors d'une fourchette de valeurs (15, 16).

3. Procédé selon la revendication 2, **caractérisé en ce que** la fourchette de valeurs (15,16), est fonction d'une température (θ) du moteur.

4. Procédé selon l'une des revendications précédentes, **caractérisé en ce que** la correction est autorisée si le régime du moteur est stabilisé à une valeur de ralenti (17).

5. Procédé selon l'une des revendications 2 à 4, **caractérisé en ce que** la correction ne s'effectue que pendant une durée donnée (21) débutant après une période de latence (22) suivant l'autorisation.

6. Procédé selon la revendication 5, **caractérisé en ce que** la durée (21) est exprimée en une valeur de nombre de tour du moteur.

7. Procédé selon l'une des revendications précédentes,
**caractérisé en ce que** la correction (36) est proportionnelle à un écart (26) de valeur du coefficient de richesse (CR) par rapport à une valeur nominale (27) du coefficient de richesse.

8. Procédé selon la revendication 7, **caractérisé en ce qu'**un coefficient de proportionnalité (32) de la correction est fixé lors de la construction du véhicule.

9. Procédé selon l'une des revendications précédentes, **caractérisé en ce que** la correction est incrémentée (35) à chaque tour du moteur tant que la valeur de correction ne sort pas d'une fourchette de valeurs données (37, 38) de correction de capacité à se vaporiser du carburant.

## Claims

1. A method for starting an internal combustion engine of a vehicle, particularly a motor vehicle, in which the engine uses fuel, and the vehicle includes means for estimating a volatility of the fuel, means for adjusting a quantity of fuel injected into a cylinder of the engine when the engine is started according to the estimated volatility of the fuel, means for regulating the richness of a mixture of air and fuel combusted in the engine, the means for estimating a volatility of the fuel comparing a trend of the engine speed during a cold starting phase to a reference engine speed trend,
**characterized in that**
an estimated volatility value of the fuel is corrected (25, 35) according to a coefficient of richness (CR) of the mixture determined by the means for regulating richness.

2. The method as recited in claim 1,
**characterized in that**
the correction is authorised (12) if the coefficient of richness (CR) is outside of a range of values (15, 16).

3. The method as recited in claim 2,
**characterized in that**
the range of values (15, 16) is a function of a temperature (θ) of the engine.

4. The method as recited in any of the preceding claims,
**characterized in that**
the correction is authorised (12) if the engine speed is stabilised at an idle value (17).

5. The method as recited in any of claims 2 to 4,
**characterized in that**
the correction is only made during a given period (21) starting after a latency period (22) following the authorisation.

6. The method as recited in claim 5,
**characterized in that**
the duration (21) is expressed as a value of the number of revolutions of the engine.

7. The method as recited in any of the preceding claims,
**characterized in that**
the correction (36) is proportional to a difference (26) between the value of the coefficient of richness (CR) and a nominal value (27) of the coefficient of richness.

8. The method as recited in claim 7,
**characterized in that**
a coefficient of proportionality (32) of the correction is fixed when the vehicle is built.

9. The method as recited in any of the preceding claims,
**characterized in that**
the correction is incremented (35) for every revolution of the engine as long as the correction value does not pass outside of a range of given correction values (37, 38) for the volatility of the fuel.

## Patentansprüche

1. Verfahren zum Starten eines Verbrennungsmotors eines Fahrzeug, insbesondere eines Kraftfahrzeugs, wobei der Motor Kraftstoff verwendet, wobei das Fahrzeug Mittel zum Schätzen einer Verdampfungskapazität des Kraftstoffs, Mittel zum Anpassen einer Kraftstoffmenge, die in einen Zylinder des Motors bei einem Starten des Motors in Abhängigkeit von der geschätzten Verdampfungskapazität des Kraftstoffs eingespritzt wird, Mittel zum Regeln der Reichhaltigkeit eines Luft- und Kraftstoffgemischs, das in dem Motor verbrannt wird, aufweist, wobei die Mittel zum Schätzen einer Verdampfungskapazität des Kraftstoffs eine Entwicklung der Motordrehzahl bei einer Kaltstartphase mit einer Entwicklung der Motorbezugsdrehzahl vergleichen, **dadurch gekennzeichnet, dass** man einen geschätzten Verdampfungskapazitätswert des Kraftstoffs in Abhängigkeit von einem Reichhaltigkeitskoeffizienten (CR) des Gemischs, der von den Reichhaltigkeitsregelmitteln bestimmt wird, korrigiert (25, 35).

2. Verfahren nach Anspruch 1, **dadurch gekennzeichnet, dass** die Korrektur genehmigt wird (12), wenn der Reihhaltigkeitskoeffizient (CR) außerhalb eines Wertebereichs (15, 16) liegt.

3. Verfahren nach Anspruch 2, **dadurch gekennzeichnet, dass** der Wertebereich (15, 16) von einer Temperatur (θ) des Motors abhängt.

4. Verfahren nach einem der vorhergehenden Ansprüche, **dadurch gekennzeichnet, dass** die Korrektur genehmigt wird, wenn die Motordrehzahl auf einem Leerlaufwert (17) stabilisiert ist.

5. Verfahren nach einem der Ansprüche 2 bis 4, **dadurch gekennzeichnet, dass** die Korrektur nur während einer gegebenen Dauer (21) erfolgt, die nach einer Latenzperiode (22) nach der Genehmigung beginnt.

6. Verfahren nach Anspruch 5, **dadurch gekennzeichnet, dass** die Dauer (21) in einem Motordrehzahlwert ausgedrückt ist.

7. Verfahren nach einem der vorhergehenden Ansprüche, **dadurch gekennzeichnet, dass** die Korrektur (36) zu einer Abweichung (26) des Reichhaltigkeitskoeffizientenwerts (CR) von einem Nennwert (27) des Reichhaltigkeitskoeffizienten proportional ist.

8. Verfahren nach Anspruch 7, **dadurch gekennzeichnet, dass** ein Proportionalitätskoeffizient (32) der Korrektur beim Bau des Fahrzeugs festgelegt wird.

9. Verfahren nach einem der vorhergehenden Ansprüche, **dadurch gekennzeichnet, dass** die Korrektur bei jeder Umdrehung des Motors inkrementiert (35) wird, solange der Korrekturwert einen Bereich gegebene Korrekturdatenwerte (37, 38) der Verdampfungskapazität des Kraftstoffs nicht überschreitet.
